(19) Europäisches Patentamt
European Patent Office
Office européen des brevets

(11) **EP 4 242 260 B1**

(12) **EUROPEAN PATENT SPECIFICATION**

(45) Date of publication and mention
of the grant of the patent:
**11.09.2024  Bulletin 2024/37**

(51) International Patent Classification (IPC):
*C08L 7/00* (2006.01)  *B60C 1/00* (2006.01)
*C08K 3/36* (2006.01)  *C08L 9/00* (2006.01)

(21) Application number: **23157942.6**

(52) Cooperative Patent Classification (CPC):
**C08L 7/00; B60C 1/0016; B60C 3/04; C08K 3/36; C08L 9/00;** Y02T 10/86

(22) Date of filing: **22.02.2023**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.03.2022   JP 2022038465**

(43) Date of publication of application:
**13.09.2023   Bulletin 2023/37**

(73) Proprietor: **Sumitomo Rubber Industries, Ltd.
Kobe-shi, Hyogo 651-0072 (JP)**

(72) Inventor: **TANAKA, Tatsuhiro
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 608 362    EP-A1- 3 725 837
EP-A1- 3 885 159**

**Description**

TECHNICAL FIELD

The present invention relates to a tire.

BACKGROUND OF THE INVENTION

It is desired that fuel efficiency, steering stability on a wet road, abrasion resistance, and the like are achieved as performance of a tire at a high level.

For example, JP 2020-132860 A describes a rubber composition for tire tread that comprises a large compounding amount of silica and a predetermined plasticizing agent component and that is excellent in wet grip performance and abrasion resistance.

SUMMARY OF THE INVENTION

However, there is a problem that, when a content of silica is increased, heat generation of a tread is increased, rolling resistance deteriorates, and thus fuel efficiency deteriorates.

It is an object of the present invention to provide a tire having an improved total performance of fuel efficiency, steering stability on a wet road, and abrasion resistance.

The present invention relates to:

a tire comprising a tread,
wherein the tread is composed of a rubber composition comprising a rubber component, silica, and a softening agent,
wherein the rubber component comprises a butadiene rubber,
wherein the softening agent comprises a modified liquid butadiene rubber that is modified with a functional group that interacts with silica,
wherein, when a content of the butadiene rubber after the rubber composition subjected to vulcanization is extracted with tetrahydrofuran is defined as X (% by mass), a tire cross-sectional width is defined as Wt (mm), and a tire outer diameter is defined as Dt (mm), X, Wt, and Dt satisfy the following inequalities (1) and (2).

$$(\pi/4) \times (Dt^2/Wt) > 1622 \quad \cdots \quad (1)$$

$$X > 1.77 \times 10^{-3} \times (\pi/4) \times (Dt^2/Wt) \quad \cdots \quad (2)$$

According to the present invention, provided is a tire that is excellent in total performance of fuel efficiency, steering stability on a wet road, and abrasion resistance.

BRIEF DESCRIPTION OF THE DRAWINGS

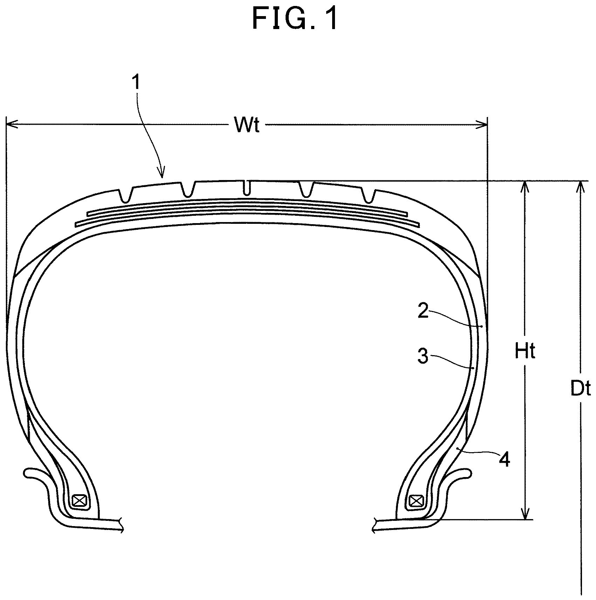

FIG. 1 is a schematic partial cross-sectional view of a tire according to one embodiment of the present invention.

DETAILED DESCRIPTION

The present invention is a tire comprising a tread,

wherein the tread is composed of a rubber composition comprising a rubber component, silica, and a softening agent,
wherein the rubber component comprises a butadiene rubber,
wherein the softening agent comprises a modified liquid butadiene rubber that is modified with a functional group that interacts with silica,
wherein, when a content of the butadiene rubber after the rubber composition subjected to vulcanization is extracted with tetrahydrofuran is defined as X (% by mass), a tire cross-sectional width is defined as Wt (mm), and a tire outer diameter is defined as Dt (mm), X, Wt, and Dt satisfy the following inequalities (1) and (2).

$$(\pi/4) \times (Dt^2/Wt) > 1622 \quad \cdots \quad (1)$$

$$X > 1.77 \times 10^{-3} \times (\pi/4) \times (Dt^2/Wt) \cdots (2)$$

A mechanism by which effects of the present invention are exhibited is considered, for example, as follows, although it is not intended to be bound by any theory.

In the tire of the present invention, (1) when the tire outer diameter Dt and the tire cross-sectional width Wt have a predetermined relationship and an area of a tread part relative to a surface area of a tire is decreased, heat generation caused by friction between the tire and a road surface can be lowered. Moreover, (2) when the rubber component of the tread comprises silica and the modified liquid butadiene rubber modified with a functional group that interacts with silica, the functional group binds to a silanol group of silica to hydrophobize the silanol group of silica, silica is easily dispersed into the rubber component, and (3) when a network via the liquid butadiene rubber is formed, silica is distributed also in the butadiene rubber in which it is usually difficult to distribute silica, so that silica is highly dispersed in a rubber matrix and can be uniformized. Moreover, (4) when the content of the butadiene rubber after extracting the rubber composition subjected to vulcanization with tetrahydrofuran, the tire cross-sectional width, and the tire outer diameter satisfy a predetermined relationship, silica is distributed in the butadiene rubber even in a narrow tread in which grounding pressure easily increases and in which the destruction of the rubber composition originating from a silica aggregate easily occurs, thereby suppressing the destruction of the rubber composition originating from the silica aggregate, so that abrasion resistance is improved, and (5) energy loss due to concentration of stress on the silica aggregate is also suppressed, so that softness of the rubber composition in a case where strain of the tire is low is also ensured and the followability to a road surface is improved. Additionally, with cooperation of these (1) to (5), it is considered that a remarkable effect of realizing an excellent total performance of fuel efficiency, steering stability on a wet road, and abrasion resistance is achieved.

A content of silica based on 100 parts by mass of the rubber component is preferably 40 parts by mass or more.

When the content of silica is 40 parts by mass or more, silica is highly dispersed, and thus it is considered that abrasion resistance and steering stability on a wet road can be further improved.

The content of silica based on 100 parts by mass of the rubber component is preferably 150 parts by mass or less.

When the content of silica is 150 parts by mass or less, aggregation of silica can be suppressed, and thus it is considered that fuel efficiency is further improved.

An average primary particle size of silica is preferably 20 nm or less.

When the average primary particle size of silica is 20 nm or less, silica is further highly dispersed in the rubber matrix, so that silica can be uniformized, and thus it is considered that abrasion resistance is improved.

A content of the liquid butadiene rubber based on 100 parts by mass of the rubber component is preferably 50 parts by mass or less.

When the content of the liquid butadiene rubber is 50 parts by mass or less, silica can be highly dispersed without substantially decreasing an average molecular weight in the rubber matrix, and thus it is considered that abrasion resistance is improved.

The functional group interacting with silica preferably comprises at least one selected from a group consisting of oxygen, nitrogen, silicon, and phosphorus.

When the functional group interacting with silica includes at least one selected from the above-described group, the functional group binds to a silanol group on a surface of silica, thereby hydrophobizing the silanol group of silica, so that it becomes easy to disperse silica into the rubber component, and thus it is considered that fuel efficiency and abrasion resistance are further improved.

It is preferable that the rubber component further comprises a styrene-butadiene rubber.

When the rubber component comprises the styrene-butadiene rubber, it is considered that steering stability on a wet road and abrasion resistance are further improved.

It is preferable that the rubber component further comprises an isoprene-based rubber.

When the rubber component comprises the isoprene-based rubber, heat generation is suppressed, and thus it is considered that fuel efficiency is further improved.

A content of an aromatic component in a component extracted with tetrahydrofuran is preferably 11.0% by mass or less.

When the content of an aromatic component in the component extracted with tetrahydrofuran is within the above-described range, it is considered that it becomes easy to disperse silica in the rubber component.

It is preferable that the softening agent further comprises at least one selected from a group consisting of oil, a resin component, and an ester-based plasticizing agent.

When the softening agent further includes at least one selected from the above-described group, the softness of the rubber composition in a case where strain of the tire is low is further ensured, thereby improving the followability to a road surface, and thus it is considered that steering stability on a wet road and fuel efficiency are improved.

A ratio of a mass content of the liquid butadiene rubber to a total amount of the softening agent is preferably greater than 15% by mass and less than 70% by mass.

When the ratio of a mass content of the liquid butadiene rubber to a total amount of the softening agent is within the above-described range, the functional group binds to a silanol group on a surface of silica, thereby hydrophobizing the silanol group of silica, so that it becomes easy to disperse silica into the rubber component, and thus it is considered that abrasion resistance is further improved.

The resin component preferably comprises a terpene-based resin.

When the resin component comprises the terpene-based resin, the softness of the rubber composition in a case where strain of the tire is low is further ensured, thereby improving the followability to a road surface, and thus it is considered that steering stability on a wet road and fuel efficiency are improved.

The oil preferably comprises mineral oil.

When the oil includes the mineral oil, the softness of the rubber composition in a case where strain of the tire is low is further ensured, thereby improving the followability to a road surface, and thus it is considered that steering stability on a wet road and fuel efficiency are improved.

<Definition>

A "standardized rim" is a rim defined for each tire in a standard system including a standard, on which the tire is based, by each standard, and refers to, for example, a "standard rim" in JATMA, "Measuring Rim" in ETRTO, or "Design Rim" in TRA. JATMA, ETRTO, and TRA are referred to in this order, and when an applicable size is found during reference to the standard, a standardized rim is based on that standard. Besides, in a case of a tire whose size is not defined in the above-described standard system, the "standardized rim" is defined as a rim that can be rim-assembled to such a tire and that has the narrowest width among rims having a minimum diameter and not causing air leakage between the rims and the tire.

A "standardized internal pressure" is an air pressure defined for each tire in a standard system including a standard, on which the tire is based, by each standard, for example, the "MAXIMUM AIR PRESSURE" in JATMA, "INFLATION PRESSURE" in ETRTO, or the "maximum value" described in "TIRE LOAD LIMITS AT VARIOUS COLD INFLATION PRESSURES" in TRA. In a case of a tire whose size is not defined in the standard, the standardized internal pressure is defined as being 250 kPa.

A "standardized state" is a state in which the tire is rim-assembled to a standardized rim, filled with air at a standardized internal pressure, and applied with no load. Besides, in a case of a tire whose size is not defined in the above-described standard system, the standardized state is defined as a state in which the tire is rim-assembled to the rim having the minimum diameter, filled with air at 250 kPa, and applied with no load. In the present specification, unless otherwise noted, the size (such as tire cross-sectional width Wt) of each part of the tire is measured in the standardized state.

A "standardized load" means a load defined in a standard system including a standard, on which the tire is based, by each standard. For example, the "standardized load" is the "MAXIMUN LOAD CAPACITY" in JATMA, "LOAD CAPACITY" in ETRTO, or the "maximum value" described in "TIRE LOAD LIMITS AT VARIOUS COLD INFLATION PRESSURES" in TRA.

The "tire cross-sectional width Wt" means a total width in a case where the standardized load is applied to a tire and a tread is pressed against a flat surface. In this regard, in a case where there are patterns, letters, or the like on a tire lateral side, the tire cross-sectional width is a maximum width between the sidewall outer surfaces from which the patterns, letters, or the like are excluded.

The "tire outer diameter Dt" means a diameter of the tire at a standardized internal pressure.

The "aspect ratio (%) of the tire" is calculated, from a tire cross-sectional height Ht (mm) and the tire cross-sectional width Wt (mm) at a standardized internal pressure, by $(Ht/Wt) \times 100$.

A "content of oil" also comprises an amount of oil contained in an oil-extended rubber.

<Measuring method>

A "content of butadiene rubber after extraction with tetrahydrofuran (THF)" is a content (% by mass) of a butadiene rubber in a test piece of a vulcanized rubber extracted with THF when a mass percent of the test piece of a vulcanized rubber extracted with THF is defined as 100% by mass. That is, the content of butadiene rubber after extraction with THF is obtained by immersing a rubber composition in a solvent to identify a butadiene rubber from a solvent-insoluble component, and the content of butadiene rubber after extraction with THF is obtained by, for example, the following procedure. The rubber composition subjected to vulcanization is cut into a 1 mm square cube, which is put into a basket of a 30 mm square cube, the basket being made of a stainless-steel wire net of 200 meshes, immersed together with the basket in 50 mL of tetrahydrofuran and allowed to stand at 25°C in a dark place for 24 hours, and then residues insoluble in THF are analyzed by a pyrolysis gas chromatography (PyGC) to identify a butadiene rubber.

Pyrolysis is performed at 450°C or more and 700°C or less, and a molecular weight of sample is calculated based on a previously-prepared calibration curve. For preparation of the calibration curve, a plurality of monodisperse polystyrenes are used as standard samples. A peak originating from the butadiene rubber is detected from a result of the PyGC, baseline correction and standardization are performed, and a content of butadiene rubber in a solvent-insoluble component of each test piece is calculated.

A "content of aromatic component in a component extracted with tetrahydrofuran (THF)" is calculated by immersing a rubber composition in a solvent to identify an aromatic component from a solvent-soluble component. The rubber composition subjected to vulcanization is cut into a 1 mm square cube, which is put into a basket of 30 mm square cube, the basket being made of a stainless-steel wire net of 200 meshes, immersed together with the basket in 50 mL of tetrahydrofuran and allowed to stand at 25°C in a dark place for 24 hours, and then the solution is filtered using a fluororesin filter having a pore size of 0.45 $\mu$m to remove a solvent-insoluble component, thereby preparing a sample solution containing a solvent-soluble component. Using a gel permeation chromatography (GPC), tetrahydrofuran as eluent is run at a flow rate of 1 mL per minute, a column is stabilized in a thermostatic bath at 40°C, 100 $\mu$L of the sample solution is injected thereinto, and measurement is made using a measuring device. A molecular weight of sample is calculated based on a previously-prepared calibration curve. For preparation of the calibration curve, a plurality of monodisperse polystyrenes are used as standard samples. A peak originating from the aromatic component is detected from a result of the GPC, baseline correction and standardization are performed on text data for the result of the GPC, and a content of aromatic component in a solvent-soluble component of each test piece is calculated.

A "glass transition temperature of a rubber component" is a value measured in accordance with JIS K 7121 using a differential scanning calorimeter (Q200) manufactured by TA Instruments Japan Inc. under a condition of a temperature rising rate of 10°C/min. For example, it is applied to a SBR, a BR, and the like.

A "styrene content" is a value calculated by $^1$H-NMR measurement and is applied to a rubber component having a repeat unit originating from styrene, such as, for example, a SBR.

A "vinyl content (1,2-bond butadiene unit amount)" is a value calculated in accordance with JIS K 6239-2:2017 by an infrared absorption spectrometry and is applied to a rubber component having a repeat unit originating from butadiene such as, for example, a SBR, and a BR.

A "cis content (cis-1,4-bond butadiene unit amount)" is a value calculated in accordance with JIS K 6239-2:2017 by an infrared absorption spectrometry and is applied to a rubber component having a repeat unit originating from butadiene such as, for example, a BR.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, a SBR, a BR, a resin component, a liquid rubber, or the like.

An "average primary particle size" is a value calculated by an arithmetic average of particle sizes of 400 particles after taking photographs of the particles with a transmission or scanning electron microscope. In a case where shapes of the particles are spherical, a diameter of the sphere is defined as a particle size. In a case where the particles have shapes other than spherical shapes, an equivalent circle diameter (positive square root of $\{4\times(\text{area of particle})\div\pi\}$) is calculated from an microscopic image and defined as a particle size.

A "$N_2SA$ of silica" is measured by a BET method according to ASTM D3037-93.

A "$N_2SA$ of carbon black" is measured according to JIS K 6217-2 "Carbon black for rubber industry-Fundamental characteristics- Part 2: Determination of specific surface area- Nitrogen adsorption methods-Single-point procedures".

A "softening point of the resin component" is a temperature at which a sphere drops when the softening point specified in JIS K 6220-1: 2001 is measured with a ring and ball softening point measuring device.

A procedure for producing a tire that is one embodiment of the present invention is described below in detail. However, the following descriptions are illustrative for explaining the present invention, and are not intended to limit the technical scope of the present invention to this description range only.

<Tire>

FIG. 1 is an enlarged cross-sectional view showing a portion of the tire according to the present invention. A vertical direction is a tire radial direction, a horizontal direction is a tire width direction, and a direction perpendicular to a paper surface is a tire circumferential direction.

In the tire of the present invention, the aspect ratio is preferably 45% or more, more preferably 50% or more, further preferably 52% or more, further preferably 52.5% or more, further preferably 53% or more, particularly preferably 55% or more. When the aspect ratio is within the above-described ranges, local deformation of the tire can be suppressed by increasing a height of a side part of the tire, so that steering stability on a wet road can be further improved. An upper limit value of the aspect ratio is not particularly limited and is usually 85% or less.

The outer diameter Dt of the tire is preferably 600 mm or more, more preferably 625 mm or more, further preferably 650 mm or more, particularly preferably 690 mm or more. Moreover, the outer diameter Dt of the tire is preferably less than 850 mm, more preferably less than 800 mm, further preferably less than 750 mm, further preferably less than 725 mm, particularly preferably less than 710 mm.

The cross-sectional width Wt of the tire is preferably 125 mm or more, more preferably 140 mm or more, further preferably 150 mm or more, further preferably 155 mm or more, further preferably 160 mm or more, further preferably 170 mm or more. Moreover, the cross-sectional width Wt of the tire is preferably less than 305 mm, more preferably less than 245 mm, further preferably less than 230 mm, particularly preferably less than 210 mm.

The tire of the present invention is characterized in that the cross-sectional width Wt (mm) of the tire and the tire outer diameter Dt (mm) in the case where a standardized load is applied to the tire to press a tread against the flat surface satisfy the following inequality (1).

$$(\pi/4)\times(Dt^2/Wt) > 1622 \quad\cdots\quad (1)$$

The value of $(\pi/4)\times(Dt^2/Wt)$ is preferably greater than 1650, more preferably greater than 1800, further preferably greater than 2000, further preferably greater than 2100, further preferably greater than 2150, further preferably greater than 2200, particularly preferably greater than 2400, from the viewpoint of the effects of the present invention. Moreover, an upper limit value of $(\pi/4)\times(Dt^2/Wt)$ is, but not particularly limited to, preferably less than 3000, more preferably less than 2700, further preferably less than 2500.

Here, there is a relationship in which the value in the inequality (1) increases as Dt increases, and conversely, it decreases as Dt decreases, whereas the value in the inequality (1) decreases as Wt increases, and conversely, it increases as Wt decreases. Accordingly, by paying attention to this point, adjustment can be made so that Dt and Wt satisfy the inequality (1), by adjusting Dt and Wt.

Specific examples of a tire size satisfying the inequality (1) include 155/55R18, 155/70R19, 155/55R19, 155/70R17, 165/55R20, 165/55R21, 165/60R19, 165/65R19, 165/70R18, 175/55R19, 175/55R20, 175/55R22, 175/60R18, 175/60R19, 185/55R19, 185/60R20, 195/50R20, 195/55R20, 205/55R16, 195/65R15, and the like.

The tire of the present invention is characterized in that, when a content of the butadiene rubber after the rubber composition subjected to vulcanization is extracted with tetrahydrofuran is defined as X (% by mass), the following inequality (2) is satisfied.

$$X > 1.77\times10^{-3}\times(\pi/4)\times(Dt^2/Wt) \quad\cdots\quad (2)$$

The content X (% by mass) of the butadiene rubber after the rubber composition subjected to vulcanization is extracted with tetrahydrofuran will be described below.

<Content of butadiene rubber after rubber composition subjected to vulcanization is extracted with tetrahydrofuran>

In the present invention, a content of the butadiene rubber after the rubber composition subjected to vulcanization is extracted with tetrahydrofuran is preferably 5.0% by mass or more, more preferably 6.0% by mass or more, further preferably 8.0% by mass or more, further preferably 10.0% by mass or more, particularly preferably 11.0% by mass or more, from the viewpoint of suppressing the destruction of the rubber composition originating from a silica aggregate by dispersing silica in the butadiene rubber to improve abrasion resistance. Moreover, the content of the butadiene rubber after the rubber composition subjected to vulcanization is extracted with tetrahydrofuran is preferably 30.0% by mass or less, more preferably 28.0% by mass or less, further preferably 25.0% by mass or less, further preferably 20.0% by mass or less, particularly preferably 18.0% by mass or less, from the viewpoint that the rubber component includes another rubber component other than the butadiene rubber to further improve the effects of the present invention. The content of the butadiene rubber after the rubber composition subjected to vulcanization is extracted with tetrahydrofuran is calculated by the above-described measuring method.

<Content of aromatic component in component extracted with tetrahydrofuran>

A content of the aromatic component after extraction with tetrahydrofuran is preferably 3.0% by mass or more, more preferably 5.0% by mass or more, further preferably 6.0% by mass or more, further preferably 6.5% by mass or more, particularly preferably 8.0% by mass or more, from the viewpoint that the rubber component includes another rubber component other than the butadiene rubber to further improve the effects of the present invention. Moreover, the content of the aromatic component after extracted with tetrahydrofuran is preferably 20.0% by mass or less, more preferably 15.0% by mass or less, further preferably 12.5% by mass or less, further preferably 11.0% by mass or less, particularly preferably 10.0% by mass or less, from the viewpoint of uniformizing silica by highly dispersing silica in a rubber matrix. Examples of the aromatic component after extraction with tetrahydrofuran include, for example, styrene, 2-methylstyrene, 3-methylstyrene, 4-methylstyrene, $\alpha$-methylstyrene, 2, 4-dimethylstyrene, 2, 4-diisopropyl styrene, 4-tert-butylstyrene, divinylbenzene, tert-butoxystyrene, vinylbenzyldimethylamine, (4-vinylbenzyl)dimethylaminoethylether, N, N-dimethylaminoethylstyrene, vinylpyridine, and the like. The content of the aromatic component after extraction with tetrahydrofuran is calculated by the above-described measuring method.

<Rubber component>

The rubber composition according to the present invention comprises a rubber component, silica, and a softening agent. The rubber component that the rubber composition according to the present invention comprises (which is referred to as the "rubber component of the present invention" hereinafter) comprises a butadiene rubber (BR), preferably comprises the BR and a styrene-butadiene rubber (SBR), or can also be a rubber component comprising the BR, the SBR, and an isoprene-based rubber. Moreover, it can also be a rubber component consisting of the BR and the SBR or a rubber component consisting of the BR, the SBR, and the isoprene-based rubber.

(BR)

The BR is not particularly limited, and those common in the tire industry can be used, such as, for example, a BR having a cis content less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR).

Examples of the high cis BR include, for example, a high cis BR manufactured and sold by JSR Corporation, Zeon Corporation, Ube Industries, Ltd., etc., and the like. When the rubber component comprises a high cis BR, a low-temperature property and abrasion resistance can be improved. Examples of the rare-earth-based BR include, for example, a rare-earth-based BR manufactured and sold by LANXESS, etc.

Examples of the SPB-containing BR include those in which 1,2-syndiotactic polybutadiene crystal is chemically bonded with BR and dispersed, but not those in which the crystal is simply dispersed in the BR. Examples of such a SPB-containing BR include a SPB-containing BR manufactured and sold by Ube Industries, Ltd., etc.

Examples of the modified BR include those obtained by adding a tin compound after polymerizing 1,3-butadiene by a lithium initiator, the terminal of which is further bonded by tin-carbon bond (tin-modified BRs), a butadiene rubber having a condensed alkoxysilane compound at an active terminal of the butadiene rubber (modified BR for silica), and the like. Examples of such a modified BR include, for example, a tin-modified BR manufactured by ZS Elastomer Co., Ltd., a S-modified polymer (modified BR for silica) manufactured by ZS Elastomer Co., Ltd., and the like.

A weight-average molecular weight (Mw) of the BR is preferably 300,000 or more, more preferably 350,000 or more, further preferably 400,000 or more, from the viewpoints of abrasion resistance, grip performance, and the like. Moreover, it is preferably 2,000,000 or less, more preferably 1,000,000, from the viewpoint of cross-linking uniformity. Besides, the Mw can be obtained by the above-described measuring method.

A content of the BR in the rubber component is preferably 5% by mass or more, more preferably 7% by mass or more, further preferably 10% by mass or more, further preferably 15% by mass or more, further preferably 20% by mass or more, further preferably 25% by mass or more, particularly preferably 30% by mass or more, from the viewpoint of steering stability on a wet road. Moreover, the content of the BR in the rubber component is preferably 80% by mass or less, more preferably 70% by mass or less, further preferably 60% by mass or less.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable, and the modified S-SBR is more preferable. Additionally, hydrogenated ones of these SBR (hydrogenated SBR) and the like can also be used. These SBRs may be used alone, or two or more thereof may be used in combination.

Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoint of steering stability on a wet road. On the other hand, the styrene content of the SBR is preferably 55% by mass or less, more preferably 50% by mass or less, further preferably 45% by mass or less. If the styrene content of the SBR is greater than 55% by mass, styrene groups become adjacent to each other, the polymer becomes too hard, cross linking easily becomes non-uniform, and thus there is a risk that blow performance during running at a high temperature would deteriorate. Moreover, temperature dependency increases, a change in performance relative to a change in temperature becomes large, and thus a stable grip performance during running and at a later stage tends not to be obtained favorably. Besides, in the present specification, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependency, steering stability on a wet road, elongation at break, and abrasion resistance. Besides, in the present specification, the vinyl content of the SBR (1,2-bond butadiene unit amount) is measured by the above-described measuring method.

A weight-average molecular weight (Mw) of the SBR is preferably 200,000 or more, more preferably 300,000 or more, further preferably 400,000 or more, particularly preferably 500,000 or more, from the viewpoints of steering stability on a wet road and abrasion resistance. Moreover, the Mw is preferably 2,000,000 or less, more preferably 1,500,000 or less, further preferably 1,000,000 or less, from the viewpoints of cross-linking uniformity and the like. Besides, the Mw is measured by the above-described measuring method.

A content of the SBR in the rubber component is preferably 30% by mass or more, more preferably 40% by mass or more, further preferably 50% by mass or more, particularly preferably 60% by mass or more, from the viewpoint of steering stability on a wet road. Moreover, the content of the SBR in the rubber component is preferably 95% by mass or less, more preferably 90% by mass or less, more preferably 80% by mass or less, further preferably 70% by mass or less, from the viewpoint of abrasion resistance.

(Isoprene-based rubber)

As an isoprene-based rubber, for example, those common in the tire industry can be used, such as an isoprene rubber (IR) and a natural rubber. Examples of the natural rubber include an unmodified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in the rubber component is preferably 5% by mass or more, more preferably 10% by mass or more, further preferably 15% by mass or more, particularly preferably 20% by mass or more, from the viewpoint of fuel efficiency. Moreover, in the rubber composition of the present invention, an upper limit value of the content of the isoprene-based rubber in the rubber component is, but not particularly limited to, preferably 60% by mass or less, more preferably 50% by mass or less, further preferably 40% by mass or less, from the relationship with preferable contents of other rubber components such as the BR and the SBR.

(Other rubber components)

As the rubber component of the present invention, the rubber composition may comprise a rubber component other than the above-described BR, SBR, and isoprene-based rubber to an extent that the effects of the present invention are not impaired. As another rubber component, a cross-linkable rubber component commonly used in the tire industry can be used, examples of which include a diene-based rubber other than the isoprene-based rubber, the BR, and the SBR, such as a styrene-isoprene rubber (SIR), a styrene-isoprene-butadiene rubber (SIBR), a chloroprene rubber (CR), and an acrylonitrile-butadiene rubber (NBR); and a rubber component other than the diene-based rubber, such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. The rubber component according to the present invention preferably comprises 80% by mass or more of a diene-based rubber, more preferably comprises 90% by mass or more of a diene-based rubber, further preferably comprises 95% by mass or more of a diene-based rubber, particularly preferably comprises 98% by mass or more of a diene-based rubber, or may be a rubber component consisting of a diene-based rubber. Moreover, it may or may not comprise a known thermoplastic elastomer together with the above-described rubber component.

<Filler>

The rubber composition of the present invention comprises silica as a filler. It is more preferable that the rubber composition of the present invention further comprises carbon black in addition to silica.

(Silica)

When the rubber composition of the present invention comprises silica, rolling resistance is reduced, and thus fuel efficiency can be improved. Moreover, when it comprises silica, steering stability on a wet road can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable for the reason that it has many silanol groups. The silica may be used alone, or two or more thereof may be used in combination.

A nitrogen adsorption specific surface area ($N_2SA$) of silica is preferably 150 $m^2$/g or more, more preferably 180 $m^2$/g or more, further preferably 200 $m^2$/g or more, from the viewpoint of elongation at break. Moreover, it is preferably 300 $m^2$/g or less, more preferably 250 $m^2$/g or less, from the viewpoints of reduction of rolling resistance and processability. Besides, a BET specific surface area of silica in the present specification can be measured by the above-described measuring method.

The average primary particle size of silica is preferably 20 nm or less, more preferably 18 nm or less, further preferably 17 nm or less. A lower limit value of the average primary particle size is, but not particularly limited to, preferably 1 nm or more, more preferably 3 nm or more, further preferably 5 nm or more, from the viewpoint of dispersibility of silica. When the average primary particle size of silica is within the above-described ranges, dispersibility of silica can be improved more, and reinforcing property, fracture characteristics, and abrasion resistance can be further improved. Besides, the average primary particle size of silica can be obtained by the above-described measuring method.

A content of silica based on 100 parts by mass of the rubber component is preferably greater than 40 parts by mass, more preferably greater than 60 parts by mass, further preferably 80 parts by mass or more, further preferably 90 parts by mass or more, further preferably 100 parts by mass or more, from the viewpoints of fuel efficiency and improvement in steering stability on a wet road. Moreover, it is preferably 160 parts by mass or less, preferably 150 parts by mass or less, further preferably 140 parts by mass or less, from the viewpoint of suppression of an increase in rolling resistance due to deterioration of dispersibility of silica in the rubber.

(Carbon black)

Carbon black is not particularly limited, and those common in the tire industry can be used, such as GPF, FEF, HAF, ISAF, and SAF. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used in addition to them. These carbon black may be used alone, or two or more thereof may be used in combination.

A nitrogen adsorption specific surface area ($N_2SA$) of carbon black is preferably 50 $m^2$/g or more, more preferably 80 $m^2$/g or more, further preferably 100 $m^2$/g or more, from the viewpoints of weather resistance and reinforcing property. Moreover, it is preferably 250 $m^2$/g or less, more preferably 220 $m^2$/g or less, from the viewpoints of dispersibility, reduction of rolling resistance, fracture characteristics, and durability. Besides, the $N_2SA$ of carbon black in the present specification can be measured by the above-described measuring method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, particularly preferably 15 parts by mass or less, from the viewpoint of fuel efficiency.

A ratio of the content of carbon black to a total content of silica and carbon black is preferably greater than 8% by mass, more preferably greater than 9% by mass, further preferably greater than 10% by mass, particularly preferably greater than 11% by mass, from the viewpoint of the effects of the present invention. Moreover, the ratio of the content of carbon black to a total content of silica and carbon black is preferably less than 40% by mass, more preferably less than 30% by mass, further preferably less than 20% by mass, further less than 15% by mass, from the viewpoint of fuel efficiency.

(Other fillers)

As a filler other than carbon black and silica, those conventionally and commonly used in the tire industry can be compounded, such as aluminum hydroxide, calcium carbonate, alumina, clay, and talc.

A content of the filler based on 100 parts by mass of the rubber component (a total amount of all of a plurality of fillers when used in combination) is preferably 10 parts by mass or more, more preferably 20 parts by mass or more, further preferably 30 parts by mass or more, from the viewpoint of steering stability on a wet road. Moreover, it is preferably 150 parts by mass or less, more preferably 140 parts by mass or less, further preferably 130 parts by mass or less, particularly preferably 120 parts by mass or less, from the viewpoint of processability.

(Silane coupling agent)

Silica is preferably used in combination with a silane coupling agent. The silane coupling agent is not particularly limited, and any silane coupling agents conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, a sulfide-based silane coupling agent and/or a mercapto-based silane coupling agent are preferably compounded in the rubber composition. As a silane coupling agent, for example, those commercially available from Momentive Performance Materials, etc. can be used. These silane coupling agents may be used alone, or two or more thereof may be used in combination.

A content of the silane coupling agent based on 100 parts by mass of silica is preferably 0.5 parts by mass or more, more preferably 1 part by mass or more, further preferably 2 parts by mass or more, particularly preferably 4 parts by mass or more, from the viewpoint of fuel efficiency. Moreover, it is preferably 20 parts by mass or less, more preferably 12 parts by mass or less, further preferably 10 parts by mass or less, particularly preferably 9 parts by mass or less, from the viewpoints of rubber strength and abrasion resistance.

<Softening agent>

The rubber composition of the present invention comprises a softening agent. The softening agent is a material giving the rubber component plasticity, examples of which include both a softening agent that is a liquid (in a liquid state) at a normal temperature (25°C) and a softening agent that is a solid at a normal temperature (25°C). The rubber composition of the present invention comprises, as a softening agent, a modified liquid butadiene rubber modified with a functional group that interacts with silica (which is referred to as a "modified liquid BR" hereinafter). Moreover, it is preferable that the rubber composition of the present invention further comprises, as a softening agent, at least one selected from a group consisting of oil, a resin component, and an ester-based plasticizing agent, and it is more preferable that it comprises two or more of them. Among them, it preferably comprises the resin component. Besides, in the present invention, the term "liquid state" means that the substance is in a liquid state at a normal temperature (25°C).

(Modified liquid BR)

The modified liquid BR modified with a functional group that interacts with silica is preferably a modified liquid BR modified with a functional group whose terminal and/or main chain include at least one element selected from a group consisting of oxygen, nitrogen, silicon, and phosphorus. Moreover, the modified liquid BR of the present invention may be either non-hydrogenated or hydrogenated.

The functional group interacting with silica is preferably a functional group including at least one element selected from a group consisting of oxygen, nitrogen, silicon, and phosphorus, examples of which include an amino group, an amide group, an isocyanate group, an imino group, an imidazole group, an urea group, a carbonyl group, an oxycarbonyl group, a sulfonyl group, an ammonium group, an imide group, a hydrazo group, an azo group, a diazo group, a nitrile group, a pyridyl group, an alkoxy group, a hydroxyl group, an oxy group, a carboxyl group, an epoxy group, an (meth)acryl group, a silanol group, etc. Among them, the amino group, the silanol group, and the alkoxy group are preferable. Examples of the alkoxy group include a methoxy group, an ethoxy group, a propoxy group, a phenoxy group, an alkoxysilyl group, an acetoxysilyl group, a chlorosilyl group, and the like, and the alkoxysilyl group is preferable. The number of carbon atoms of an alkyl group constituting the alkoxysilyl group is preferably 1 to 10.

As the modified liquid BR, a commercially-available product or a synthesized one may be used. As the commercially-available product, for example, those manufactured by Nippon Soda Co., LTD., Cray Valley, Noveon Inc., and Evonik Degussa GmbH, and the like can be used. A method of synthesis of the modified liquid BR is not particularly limited and can be performed using a known method. Examples of such a method includes, for example, a method of reacting an unmodified liquid butadiene rubber with a compound including at least one element selected from a group consisting of oxygen, nitrogen, silicon, and phosphorus in the presence of a metal catalyst to introduce a functional group, and the like.

The modified liquid BR can be used alone, or two or more thereof can be used in combination.

A weight-average molecular weight (Mw) of the modified liquid BR is preferably 800 or more, preferably 900 or more, more preferably 1,000 or more, for the reason that the effects of the present invention can be obtained more appropriately. Moreover, the Mw is preferably 10,000 or less, more preferably 9,000 or less, more preferably 8,000 or less. Besides, the weight-average molecular weight (Mw) can be calculated by the above-described method.

A glass transition temperature (Tg) of the modified liquid BR is preferably -110°C or more, more preferably -100°C or more, further preferably - 90°C or more, for the reason that the effects of the present invention are obtained more appropriately. Moreover, the Tg is preferably 0°C or less, more preferably -10°C or less, further preferably -15°C or less, further preferably - 20°C or less, further preferably -25°C or less. Besides, the glass transition temperature is measured by the above-described method.

A content of the modified liquid BR based on 100 parts by mass of the rubber component is preferably 1.0 part by mass or more, more preferably 2.0 parts by mass or more, further preferably 3.0 parts by mass or more, further preferably 5.0 parts by mass or more, from the viewpoint of the effects of the present invention. Moreover, it is preferably 70 parts by mass or less, more preferably 60 parts by mass or less, further preferably 55 parts by mass or less, particularly preferably 50 parts by mass or less, from the viewpoints of fuel efficiency and durability.

A ratio of a mass content of the modified liquid BR to a total amount of the softening agent is preferably greater than 5% by mass, more preferably greater than 7% by mass, further preferably greater than 10% by mass, further preferably greater than 12% by mass, particularly preferably greater than 15% by mass. Moreover, the ratio of a mass content of the liquid BR to a total amount of the softening agent is preferably less than 70% by mass, more preferably less than 50% by mass, further preferably less than 45% by mass, further preferably less than 40% by mass, particularly preferably less than 30% by mass.

(Other liquid rubbers)

The rubber component of the present invention may comprise, as a softening agent, a liquid rubber other than the above-described modified liquid BR to an extent that the effects of the present invention are not impaired. Examples of such a liquid rubber include, for example, an unmodified liquid butadiene rubber, a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber other than the modified liquid BR when compounded based on 100 parts by mass of the rubber component is, but not particularly limited to, preferably less than 20 parts by mass, more preferably less than 10 parts by mass, further preferably less than less than 5 parts by mass, further preferably less than less than 1 part by mass, from the viewpoint that the effects of the present invention are not impaired.

(Oil)

Examples of oil include, for example, aromatic oils, mineral oils, process oils, vegetable oils and fats, animal oils and fats, etc. Examples of the process oils include paraffinic process oils, naphthenic process oils, aromatic process oils, etc. Among them, the rubber composition preferably comprises a mineral oil as an oil component.

A content of oil when compounded based on 100 parts by mass of the rubber component is preferably 3.0 parts by mass or more, more preferably 5.0 parts by mass or more, further preferably 10.0 parts by mass or more, further preferably 12.0 parts by mass or more, particularly preferably 15.0 parts by mass or more, from the viewpoint of the effects of the present invention. Moreover, it is preferably 90 parts by mass or less, more preferably 80 parts by mass or less, further preferably 70 parts by mass or less, particularly preferably 60 parts by mass or less, from the viewpoints of fuel efficiency and durability.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component (a total amount of all of a plurality of ester-based plasticizing agents when used in combination) is preferably 3 parts by mass or more, more preferably 5 parts by mass or more, further preferably 9 parts by mass or more, from the viewpoint of steering stability on a wet road. Moreover, it is preferably 50 parts by mass or less, more preferably 40 parts by mass or less, further preferably 35 parts by mass or less, particularly preferably 30 parts by mass or less, from the viewpoint of processability.

(Resin component)

Examples of the resin component include, but not particularly limited to, a petroleum resin, a terpene-based resin, a rosin-based resin, a phenol-based resin, and the like, which are commonly used in the tire industry. Among them, the terpene-based resin is preferable. These resin components may be used alone, or two or more thereof may be used in combination.

In the present specification, a "C5-based petroleum resin" means a resin obtained by polymerizing C5 fractions. Examples of C5 fractions include, for example, petroleum fractions equivalent to 4 to 5 carbon atoms, such as cyclopentadiene, pentene, pentadiene, and isoprene. Dicyclopentadiene resin (DCPD resin) is appropriately used as a C5-based petroleum resin.

In the present specification, an "aromatic petroleum resin" means a resin obtained by polymerizing C9 fractions and may be those undergoing hydrogeneration or modification. Examples of C9 fractions include, for example, petroleum fractions equivalent to 8 to 10 carbon atoms, such as vinyltoluene, alkylstyrene, indene, and methylindene. As specific example of the aromatic petroleum resin, for example, a coumarone-indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and the copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, a "C5-C9-based petroleum resin" means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as $\alpha$-pinene, $\beta$-pinene, limonene, and dipentene; an aromatic modified terpene resin made from a terpene compound described above and an aromatic compound; and a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, $\alpha$-methylstyrene, vinyltoluene, divinyltoluene, and the like. Examples of the phenol-based compound from which the terpene phenol resin is made include, for example, phenol, bisphenol A, cresol, xylenol, and the like.

Examples of the rosin-based resin include, but not particularly limited to, for example, a natural resin rosin, a rosin-modified resin obtained by modifying it by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A softening point of the resin component is preferably 80°C or higher, more preferably 90°C or higher, further preferably 100°C or higher, from the viewpoint of grip performance. Moreover, it is preferably 200°C or lower, more preferably 150°C or lower, further preferably 130°C or lower, from the viewpoints of processability and improvement in dispersibility of the rubber component with the filler. Besides, the softening point of the resin component is measured by the above-described measuring method.

A content of the resin component when compounded based on 100 parts by mass of the rubber component is preferably 5 parts by mass or more, more preferably 7 parts by mass or more, further preferably 10 parts by mass or more, particularly preferably 15 parts by mass or more, from the viewpoint of steering stability on a wet road. Moreover, it is preferably 50 parts by mass or less, more preferably 40 parts by mass or less, further preferably 35 parts by mass or less, particularly preferably 30 parts by mass or less, from the viewpoints of fuel efficiency and abrasion resistance.

(Other compounding agents)

The rubber composition according to the present invention can appropriately comprise compounding agents conventionally and commonly used in the tire industry, such as, for example, an antioxidant, wax, zinc oxide, stearic acid, a cross-linking agent such as sulfur, and a vulcanization accelerator, in addition to the above-described components.

(Antioxidant)

Examples of the antioxidant include, but not particularly limited to, for example, amine-based, quinoline-based, quinone-based, phenol-based, and imidazole-based compounds, and antioxidants such as a carbamic acid metal salt, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diallyl-p-phenylenediamine, phenylhexyl-p-phenylenediamine, and phenyloctyl-p-phenylenediamine; and a quinoline-based antioxidant such as 2,2,4-trimethyl-1,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and steering stability on a wet road.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of whitening of a tire due to bloom.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

(Cross-linking agent)

Sulfur is appropriately used as a cross-linking agent. As sulfur, a powdery sulfur, an oil processing sulfur, a precipitated sulfur, a colloidal sulfur, an insoluble sulfur, a highly dispersible sulfur, and the like can be used.

A content of sulfur when compounded based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the sulfur when an oil-containing sulfur is used as the cross-linking agent is defined as a total content of pure sulfur contained in the oil-containing sulfur.

A known organic cross-linking agent can also be used as a cross-linking agent other than sulfur. The organic cross-linking agent is not particularly limited as long as it can form a cross-linking chain other than a polysulfide bond, examples of which include, for example, an alkylphenol-sulfur chloride condensate, sodium hexamethylene-1,6-bisthiosulfate dihydrate, 1,6-bis(N,N'-dibenzylthiocarbamoyl dithio)hexane, dicumyl peroxide, etc., preferably 1,6-bis(N,N'-dibenzylthiocarbamoyl dithio)hexane is preferable. Those commercially available from Taoka Chemical Co., Ltd., LANXESS, Flexsys, etc. can be used as these organic cross-linking agents.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, sulfenamide-based and guanidine-based vulcanization accelerators are preferable from the viewpoint that a desired effect can be obtained more appropriately, and these two vulcanization accelerators are more preferably used in combination.

Examples of the sulfenamide-based vulcanization accelerator include CBS (N-cyclohexyl-2-benzothiazolyl sulfenamide), TBBS (N-(t-butyl)-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. The CBS (N-cyclohexyl-2-benzothiazolyl sulfenamide) is preferable. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. The diphenylguanidine (DPG) is preferable. These vulcanization accelerators may be used alone, or two or more thereof may be used in combination.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present invention can be produced by a known method. It can be produced by, for example, a method of kneading components other than a vulcanizing agent (cross-linking agent) and a vulcanization accelerator, of the above-described components, with a known kneading machine commonly used in the tire industry, such as a Banbury mixer, a kneader, and an open roll, and then adding the vulcanizing agent and the vulcanization accelerator to this kneaded product to further knead them, followed by vulcanizing them, and the like.

<Tire>

The tire according to the present invention is one comprising a tread composed of the above-described rubber composition for tread and is appropriately used as a tire for a passenger car, a high-performance tire for a passenger car, or the like.

The tire comprising the tread composed of the above-described rubber composition for tread can be produced using the above-described rubber composition for tread by a usual method. That is, the tire can be produced by extruding an unvulcanized rubber composition, in which the above-described components are compounded for the rubber component as appropriate, into a shape of a tread, attaching it together with other tire members on a tire forming machine, and molding them by a usual method to form an unvulcanized tire, followed by heating and pressurizing this unvulcanized tire in a vulcanizing machine.

EXAMPLES

Hereinafter, examples considered to be preferable in implementing the present invention (Examples) will be shown, though the scope of the present invention is not limited to only these Examples.

Tires comprising treads composed of rubber compositions obtained using various chemicals described below in accordance with Tables 1 to 4 are examined, and results calculated based on various analysis/evaluation methods described below are shown in Tables 1 to 4.

NR: TSR 20

SBR: HPR850 manufactured by JSR Corporation (styrene content: 26% by mass, vinyl content: 59 mol%, Mw: 190,000, Tg: -25°C, a non-oil-extended product)

BR: Ubepol BR (Registered Trademark) 150B manufactured by Ube Industries, Ltd. (vinyl content: 1.5 mol%, cis content: 97%, Mw: 440,000)

Carbon black: DIABLACK N220 manufactured by Mitsubishi Chemical Corporation ($N_2SA$: 115 $m^2$/g)

Silica: Ultrasil (Registered Trademark) VN3 manufactured by Evonik Japan Co., Ltd. ($N_2SA$: 175 $m^2$/g, average primary particle size: 17 nm)

Silane coupling agent: Si266 manufactured by Evonik Japan Co., Ltd. (bis(3-triethoxysilylpropyl)disulfide)

Unmodified liquid BR: POLYVEST 110 manufactured by Evonik Japan Co., Ltd. (Mw: 8,200, unmodified at its terminal)

Modified liquid BR: POLYVEST EP ST-E manufactured by Evonik Japan Co., Ltd. (liquid butadiene rubber both terminals of which are modified with alkoxysilyl groups, Mw: 3,200, Tg: about -80°C)

Oil: PW-380 (mineral oil) manufactured by Idemitsu Kosan Co., Ltd.

Ester-based plasticizing agent: TOP (trioctyl phosphate) manufactured by Daihachi Chemical Industry Co., Ltd

Resin component: SYLVATARAXX 4150 manufactured by Kraton Corporation (polyterpene resin, Mw: 2500, softening point: 115°C)

Antioxidant: Nocrac 6C manufactured by Ouchi Shinko Chemical Industry Co., Ltd. (N-(1,3-dimethylbutyl)-N'-phenyl-p-phenylenediamine)

Zinc oxide: Zinc oxide No. 1 manufactured by Mitsui Mining & Smelting Co., Ltd.

Stearic acid: Bead stearic acid "CAMELLIA" manufactured by NOF CORPORATION
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

(Example and Comparative example)

According to the compounding formulations shown in Table 1, using a 1.7 L closed Banbury mixer, all chemicals other than sulfur and a vulcanization accelerator are kneaded for 1 to 10 minutes until a temperature reaches a discharge temperature at 150°C to 160°C, to obtain a kneaded product. Next, using a twin-screw open roll, the sulfur and vulcanization accelerator are added to the kneaded product, and the mixture is kneaded for 4 minutes until the temperature reaches 105°C, to obtain an unvulcanized rubber composition. The unvulcanized rubber composition is molded into a shape of a tread and is attached together with other tire members to produce an unvulcanized tire. The unvulcanized tire is vulcanized at 170°C to obtain each test tire shown in Tables 1 to 4 (size: 175/60R19, 175/55R20, 155/70R19, 245/45R19, 275/35R19, 195/65R15, 155/70R19, internal pressure: 250 kPa).

<Content of butadiene rubber after extraction with tetrahydrofuran>

A test piece whose size is 1 mm. × 1 mm. × 1 mm. is cut out from a tread part of each test tire, the test piece is put into a basket of 30 mm square cube, the basket being made of a stainless-steel wire net of 200 meshes, immersed together with the basket in 50 mL of tetrahydrofuran and allowed to stand at 25°C in a dark place for 24 hours. Remaining pellets in the basket are used as measurement samples. Each measurement sample is pyrolyzed at a pyrolysis temperature of 550°C using a vertical micro electric furnace-type pyrolyzer "PY-2020iD" manufactured by Frontier Laboratories Ltd. Each pyrolyzed measurement sample is put into a sample inlet of a gas chromatograph "6880" manufactured by Agilent Technologies, Inc. Temperatures of an interface heater and the sample inlet of the gas chromatograph are set to 340°C, a temperature of an oven is kept at 40°C for 3 minutes, is increased at 8°C/min from 40°C to 300°C, and then is kept at 300°C for 15 minutes. A head pressure is set to 83 kPa in a constant pressure mode, and a split ratio is set to 50:1. Helium as carrier gas is separated using a capillary column "Ultra Alloy + - 5" manufactured by Frontier Laboratories Ltd. "Agilent 355 Sulfur Chemiluminescence Detector" manufactured by Agilent Technologies, Inc. is used for measurement, a measurement condition is set to a condition of a burner temperature at 800°C, a flow rate of hydrogen of 40 mL/min, and a flow rate of air of 60 mL/min, a butadiene rubber is identified, and a content is identified.

<Aromatic component in a component extracted with tetrahydrofuran>

After a measurement sample cut out from the tread part of each test tire is immersed in tetrahydrofuran and allowed to stand at 25°C in a dark place for 24 hours to prepare a tetrahydrofuran solution, the tetrahydrofuran solution is filtered using a fluororesin filter (DISMIC-25JP manufactured byAdvantec Co., Ltd.) having a pore size of 0.45 µm to remove a solvent-insoluble component, thereby preparing a sample solution containing a solvent-soluble component. For each sample solution, using a gel permeation chromatography (HCL-8220GPC manufactured by Tosoh Corporation) and a column for analysis (GMHXL+G3000HXL manufactured by Tosoh Corporation), tetrahydrofuran as eluent is run at a flow rate of 1 mL per minute, the column is stabilized in a thermostatic bath at 40°C, 100 µL of each sample solution is injected thereinto, and measurement is made. A molecular weight of the sample is calculated based on a previously-prepared calibration curve. For preparation of the calibration curve, a plurality of monodisperse polystyrenes (A-500 (5.0×102), A-1000 (1.01×103), A-2500 (2.63×103), A-5000 (5.97×103), F-1 (1.02×104), F-2 (1.81×104), F-4 (3.97×104), F-10 (9.64×104), F-20 (1.90×105), F-40 (4.27×105), F-80 (7.06×105), and F-128 (1.09×106) manufactured by Tosoh Corporation) are used as standard samples. A peak originating from an aromatic component (elution time: 9.5 minutes) is detected from a result of the GPC, baseline correction and standardization are performed for text data on the result of the GPC, and a content of the aromatic component in the solvent-soluble component of each test piece is calculated.

<Fuel efficiency>

Rolling resistance of each test tire is measured using a rolling resistance test machine when the test tire is made to run at a speed of 80 km/h under a condition of an internal pressure of 230 kPa and a load of 3.43 kN, and the reciprocal number of the rolling resistance is indicated as an index with Comparative examples 1 and 10 being as 100. The results show that the larger the index is, the smaller the rolling resistance is and the more excellent the fuel efficiency is.

<Steering stability on a wet road>

Each test tire is mounted on all wheels of a vehicle (a domestic FF vehicle with a displacement of 2000 cc for Examples 1 to 8 and Comparative examples 1 to 9; a domestic FF vehicle with a displacement of 1500 cc for Examples 9 to 12 and Comparative examples 10 to 13), and the vehicle is made to run 10 laps on a test course with a wet asphalt road surface. Twenty test drivers perform sensory evaluations of steering stability during enter in a cornering motion, during turn in the cornering motion, and at an exit during the cornering motion. The evaluations are performed using integer values of 1 to 5 points, and a total score by the twenty test drivers is calculated. A total score of reference Comparative examples (Comparative examples 1 in Tables 1 and 2, Comparative example 10 in Tables 3 and 4) is converted into a reference value (100), and an evaluation result for each test tire is indicated as an index in proportion to the total score. The results show that the larger the index is, the better the steering stability on the wet road surface is.

<Abrasion resistance>

Each test tire is mounted on all wheels of a vehicle (a domestic FF vehicle with a displacement of 2000 cc for Examples 1 to 8 and Comparative examples 1 to 9; a domestic FF vehicle with a displacement of 1500 cc for Examples 9 to 12 and Comparative examples 10 to 13), and a groove depth of a tread part of the tire is measured after the vehicle runs 8000 km, and a running distance when the groove depth of the tire decreases by 1 mm is calculated. Results of the calculation are indicated as indexes. The results show that the larger the index is, the better the abrasion resistance is. The indexes are calculated using the following equation. Comparative examples 1 and 10 are defined as reference Comparative examples.

(Abrasion resistance index) = (Running distance when groove of tire of each compounding example is decreased by 1 mm) / (Running distance when groove of tire of reference Comparative example is decreased by 1 mm) $\times$ 100

A sum of fuel efficiency, steering stability on a wet road, and abrasion resistance is defined as a total performance index.

Table 1

| | Example | | | |
| --- | --- | --- | --- | --- |
| | 1 | 2 | 3 | 4 |
| Compounding amount (part by mass) | | | | |
| NR | - | - | - | - |
| SBR | 70 | 70 | 70 | 70 |
| BR | 30 | 30 | 30 | 30 |
| Carbon black | 10 | 10 | 10 | 10 |
| Silica | 100 | 100 | 120 | 80 |
| Coupling agent | 8.0 | 8.0 | 9.6 | 6.4 |
| Unmodified liquid BR | - | - | - | - |
| Modified liquid BR | 10 | 40 | 10 | 10 |
| Oil | 20 | - | 35 | 5 |
| Ester-based plasticizing agent | 10 | - | 10 | 10 |
| Resin component | 20 | 20 | 20 | 20 |
| Antioxidant | 2.0 | 2.0 | 2.0 | 2.0 |
| Zinc oxide | 2.5 | 2.5 | 2.5 | 2.5 |
| Stearic acid | 1.5 | 1.5 | 1.5 | 1.5 |
| Sulfur | 1.5 | 1.5 | 1.5 | 1.5 |
| Vulcanization accelerator 1 | 2.0 | 2.0 | 2.0 | 2.0 |
| Vulcanization accelerator 2 | 2.5 | 2.5 | 2.5 | 2.5 |
| Amount of BR after extraction with THF X (% by mass) | 12.6 | 20.7 | 11.5 | 14.8 |
| Aromatic component extracted with THF (% by mass) | 10.4 | 6.9 | 11.4 | 8.9 |

(continued)

| | Example | | | |
|---|---|---|---|---|
| | 1 | 2 | 3 | 4 |
| Compounding amount (part by mass) | | | | |
| Tire size | 175/60R19 | 175/60R19 | 175/60R19 | 175/60R19 |
| Dt (mm) | 693 | 693 | 693 | 693 |
| Wt (mm) | 175 | 175 | 175 | 175 |
| Left side of inequality (1) | 2155 | 2155 | 2155 | 2155 |
| Right side of inequality (2) | 3.8 | 3.8 | 3.8 | 3.8 |
| Fuel efficiency | 120 | 112 | 110 | 131 |
| Steering stability on a wet road | 104 | 96 | 110 | 96 |
| Abrasion resistance | 132 | 145 | 127 | 143 |
| Total performance | 356 | 353 | 347 | 370 |

| | Example | | | |
|---|---|---|---|---|
| | 5 | 6 | 7 | 8 |
| Compounding amount (part by mass) | | | | |
| NR | 30 | - | - | - |
| SBR | 40 | 90 | 50 | 70 |
| BR | 30 | 10 | 50 | 30 |
| Carbon black | 10 | 10 | 10 | 10 |
| Silica | 100 | 100 | 100 | 100 |
| Coupling agent | 8.0 | 8.0 | 8.0 | 8.0 |
| Unmodified liquid BR | - | - | - | - |
| Modified liquid BR | 10 | 10 | 10 | 10 |
| Oil | 20 | 20 | 20 | 20 |
| Ester-based plasticizing agent | 10 | 10 | 10 | 10 |
| Resin component | 20 | 20 | 20 | 20 |
| Antioxidant | 2.0 | 2.0 | 2.0 | 2.0 |
| Zinc oxide | 2.5 | 2.5 | 2.5 | 2.5 |
| Stearic acid | 1.5 | 1.5 | 1.5 | 1.5 |
| Sulfur | 1.5 | 1.5 | 1.5 | 1.5 |
| Vulcanization accelerator 1 | 2.0 | 2.0 | 2.0 | 2.0 |
| Vulcanization accelerator 2 | 2.5 | 2.5 | 2.5 | 2.5 |
| Amount of BR after extraction with THF X (% by mass) | 12.6 | 6.0 | 19.8 | 12.6 |
| Aromatic component extracted with THF (% by mass) | 10.4 | 10.4 | 10.4 | 10.4 |
| Tire size | 175/60R19 | 175/60R19 | 175/60R19 | 175/55R20 |
| Dt (mm) | 693 | 693 | 693 | 701 |
| Wt (mm) | 175 | 175 | 175 | 175 |
| Left side of inequality (1) | 2155 | 2155 | 2155 | 2205 |
| Right side of inequality (2) | 3.8 | 3.8 | 3.8 | 3.9 |
| Fuel efficiency | 116 | 113 | 127 | 113 |

|  | Example | | | |
|---|---|---|---|---|
|  | 5 | 6 | 7 | 8 |
| Steering stability on a wet road | 106 | 108 | 90 | 102 |
| Abrasion resistance | 126 | 132 | 144 | 129 |
| Total performance | 348 | 353 | 361 | 344 |

Table 2

|  | Comparative example | | | | |
|---|---|---|---|---|---|
|  | 1 | 2 | 3 | 4 | 5 |
| Compounding amount (part by mass) | | | | | |
| NR | 30 | - | - | 28 | - |
| SBR | 70 | 70 | 70 | 70 | 70 |
| BR | - | 30 | 30 | 2 | 30 |
| Carbon black | 10 | 10 | 10 | 10 | 10 |
| Silica | 100 | 100 | 100 | 100 | 100 |
| Coupling agent | 8.0 | 8.0 | 8.0 | 8.0 | 8.0 |
| Unmodified liquid BR | - | 10 | - | - | - |
| Modified liquid BR | 10 | - | - | 5 | - |
| Oil | 20 | 20 | 30 | 20 | 30 |
| Ester-based plasticizing agent | 10 | 10 | 10 | 10 | 10 |
| Resin component | 20 | 20 | 20 | 20 | 20 |
| Antioxidant | 2.0 | 2.0 | 2.0 | 2.0 | 2.0 |
| Zinc oxide | 2.5 | 2.5 | 2.5 | 2.5 | 2.5 |
| Stearic acid | 1.5 | 1.5 | 1.5 | 1.5 | 1.5 |
| Sulfur | 1.5 | 1.5 | 1.5 | 1.5 | 1.5 |
| Vulcanization accelerator 1 | 2.0 | 2.0 | 2.0 | 2.0 | 2.0 |
| Vulcanization accelerator 2 | 2.5 | 2.5 | 2.5 | 2.5 | 2.5 |
| Amount of BR after extraction with THF X (% by mass) | 2.6 | 12.1 | 10.3 | 2.0 | 10.3 |
| Aromatic component extracted with THF (% by mass) | 10.4 | 10.4 | 12.1 | 10.4 | 12.1 |
| Tire size | 175/60R19 | 245/45R19 | 245/45R19 | 175/60R19 | 175/60R19 |
| Dt (mm) | 693 | 703 | 703 | 693 | 693 |
| Wt (mm) | 175 | 245 | 245 | 175 | 175 |
| Left side of inequality (1) | 2155 | 1584 | 1584 | 2155 | 2155 |
| Right side of inequality (2) | 3.8 | 2.8 | 2.8 | 3.8 | 3.8 |
| Fuel efficiency | 100 | 89 | 100 | 99 | 105 |
| Steering stability on a wet road | 100 | 78 | 82 | 86 | 80 |
| Abrasion resistance | 100 | 109 | 99 | 104 | 95 |
| Total performance | 300 | 276 | 281 | 289 | 280 |

|  | Comparative example | | | |
|---|---|---|---|---|
|  | 6 | 7 | 8 | 9 |
| Compounding amount (part by mass) | | | | |
| NR | - | 28 | - |  |
| SBR | 70 | 70 | 70 | 70 |
| BR | 30 | 2 | 30 | 30 |
| Carbon black | 10 | 10 | 10 | 10 |
| Silica | 100 | 100 | 100 | 100 |
| Coupling agent | 8.0 | 8.0 | 8.0 | 8.0 |
| Unmodified liquid BR | - | - | 10 | - |
| Modified liquid BR | 10 | 2 | - | - |
| Oil | 20 | 20 | 20 | 30 |
| Ester-based plasticizing agent | 10 | 10 | 10 | 10 |
| Resin component | 20 | 20 | 20 | 20 |
| Antioxidant | 2.0 | 2.0 | 2.0 | 2.0 |
| Zinc oxide | 2.5 | 2.5 | 2.5 | 2.5 |
| Stearic acid | 1.5 | 1.5 | 1.5 | 1.5 |
| Sulfur | 1.5 | 1.5 | 1.5 | 1.5 |
| Vulcanization accelerator 1 | 2.0 | 2.0 | 2.0 | 2.0 |
| Vulcanization accelerator 2 | 2.5 | 2.5 | 2.5 | 2.5 |
| Amount of BR after extraction with THF X (% by mass) | 12.6 | 1.2 | 12.1 | 10.3 |
| Aromatic component extracted with THF (% by mass) | 10.4 | 10.6 | 10.4 | 12.1 |
| Tire size | 275/35R19 | 275/35R19 | 275/35R19 | 275/35R19 |
| Dt (mm) | 675 | 675 | 675 | 675 |
| Wt (mm) | 275 | 275 | 275 | 275 |
| Left side of inequality (1) | 1301 | 1301 | 1301 | 1301 |
| Right side of inequality (2) | 2.3 | 2.3 | 2.3 | 2.3 |
| Fuel efficiency | 103 | 93 | 89 | 96 |
|  | 6 | 7 | 8 | 9 |
| Steering stability on a wet road | 84 | 82 | 78 | 82 |
| Abrasion resistance | 111 | 96 | 106 | 103 |
| Total performance | 298 | 271 | 273 | 281 |

Table 3

|  | Example | | | |
|---|---|---|---|---|
|  | 9 | 10 | 11 | 12 |
| Compounding amount (part by mass) | | | | |
| NR | - | - | - | 30 |
| SBR | 70 | 70 | 70 | 40 |
| BR | 30 | 30 | 30 | 30 |
| Carbon black | 10 | 10 | 10 | 10 |
| Silica | 100 | 100 | 80 | 100 |
| Coupling agent | 8.0 | 8.0 | 6.4 | 8.0 |

(continued)

| | Example | | | |
|---|---|---|---|---|
| | 9 | 10 | 11 | 12 |
| Compounding amount (part by mass) | | | | |
| Unmodified liquid BR | - | - | - | - |
| Modified liquid BR | 10 | 40 | 10 | 10 |
| Oil | 20 | - | 5.0 | 20 |
| Ester-based plasticizing agent | 10 | - | 10 | 10 |
| Resin component | 20 | 20 | 20 | 20 |
| Antioxidant | 2.0 | 2.0 | 2.0 | 2.0 |
| Zinc oxide | 2.5 | 2.5 | 2.5 | 2.5 |
| Stearic acid | 1.5 | 1.5 | 1.5 | 1.5 |
| Sulfur | 1.5 | 1.5 | 1.5 | 1.5 |
| Vulcanization accelerator 1 | 2.0 | 2.0 | 2.0 | 2.0 |
| Vulcanization accelerator 2 | 2.5 | 2.5 | 2.5 | 2.5 |
| Amount of BR after extraction with THF X (% by mass) | 12.6 | 20.7 | 14.8 | 12.6 |
| Aromatic component extracted with THF (% by mass) | 10.4 | 6.9 | 8.9 | 10.4 |
| Tire size | 155/70R19 | 155/70R19 | 155/70R19 | 155/70R19 |
| Dt (mm) | 700 | 700 | 700 | 700 |
| Wt (m m) | 155 | 155 | 155 | 155 |
| Left side of inequality (1) | 2483 | 2483 | 2483 | 2483 |
| Right side of inequality (2) | 4.4 | 4.4 | 4.4 | 4.4 |
| Fuel efficiency | 127 | 118 | 138 | 131 |
| Steering stability on a wet road | 120 | 112 | 110 | 116 |
| Abrasion resistance | 121 | 139 | 122 | 126 |
| Total performance | 368 | 369 | 370 | 373 |

Table 4

| | Comparative example | | | |
|---|---|---|---|---|
| | 10 | 11 | 12 | 13 |
| Compounding amount (part by mass) | | | | |
| NR | - | 30 | 28 | - |
| SBR | 70 | 70 | 70 | 70 |
| BR | 30 | - | 2 | 30 |
| Carbon black | 10 | 10 | 10 | 10 |
| Silica | 100 | 100 | 100 | 100 |
| Coupling agent | 8.0 | 8.0 | 8.0 | 8.0 |
| Unmodified liquid BR | - | - | - | - |
| Modified liquid BR | 10 | 10 | 5.0 | - |
| Oil | 20 | 20 | 20 | 30 |
| Ester-based plasticizing agent | 10 | 10 | 10 | 10 |
| Resin component | 20 | 20 | 20 | 20 |
| Antioxidant | 2.0 | 2.0 | 2.0 | 2.0 |
| Zinc oxide | 2.5 | 2.5 | 2.5 | 2.5 |

(continued)

| | Comparative example | | | |
|---|---|---|---|---|
| | 10 | 11 | 12 | 13 |
| Stearic acid | 1.5 | 1.5 | 1.5 | 1.5 |
| Sulfur | 1.5 | 1.5 | 1.5 | 1.5 |
| Vulcanization accelerator 1 | 2.0 | 2.0 | 2.0 | 2.0 |
| Vulcanization accelerator 2 | 2.5 | 2.5 | 2.5 | 2.5 |
| Amount of BR after extraction with THF X (% by mass) | 12.6 | 12.6 | 2.0 | 10.3 |
| Aromatic component extracted with THF (% by mass) | 10.4 | 10.4 | 10.4 | 12.1 |
| Tire size | 195/65R15 | 155/70R19 | 155/70R19 | 155/70R19 |
| Dt (mm) | 635 | 700 | 700 | 700 |
| Wt (m m) | 195 | 155 | 155 | 155 |
| Left side of inequality (1) | 1624 | 2483 | 2483 | 2483 |
| Right side of inequality (2) | 2.9 | 4.4 | 4.4 | 4.4 |
| Fuel efficiency | 100 | 103 | 105 | 107 |
| Steering stability on a wet road | 100 | 94 | 96 | 92 |
| Abrasion resistance | 100 | 102 | 97 | 93 |
| Total performance | 300 | 299 | 298 | 292 |

REFERENCE SIGNS LIST

Wt    Tire cross-sectional width
Ht    Tire cross-sectional height
Dt    Tire outer diameter
1     Tread
2     Side wall
3     Inner liner
4     Clinch

**Claims**

1.  A tire comprising a tread,

    wherein the tread is composed of a rubber composition comprising a rubber component, silica, and a softening agent,
    wherein the rubber component comprises a butadiene rubber,
    wherein the softening agent comprises a modified liquid butadiene rubber that is modified with a functional group that interacts with silica,
    wherein, when a content of the butadiene rubber after the rubber composition subjected to vulcanization is extracted with tetrahydrofuran is defined as X (% by mass), a tire cross-sectional width is defined as Wt (mm), and a tire outer diameter is defined as Dt (mm), X, Wt, and Dt satisfy the following inequalities (1) and (2).

$$(\pi/4) \times (Dt^2/Wt) > 1622 \quad \cdots \quad (1)$$

$$X > 1.77 \times 10^{-3} \times (\pi/4) \times (Dt^2/Wt) \quad \cdots \quad (2)$$

2. The tire of claim 1, wherein a content of silica based on 100 parts by mass of the rubber component is 40 parts by mass or more, preferably greater than 40 parts by mass, more preferably greater than 50 parts by mass, further preferably greater than 60 parts by mass, particularly preferably 100 parts by mass or more.

3. The tire of claim 1 or 2, wherein the content of silica based on 100 parts by mass of the rubber component is 150 parts by mass or less, preferably 120 parts by mass or less.

4. The tire of any one of claims 1 to 3, wherein an average primary particle size of the silica is 20 nm or less, preferably 18 nm or less, more preferably 17 nm or less.

5. The tire of any one of claims 1 to 4, wherein a content of the modified liquid butadiene rubber based on 100 parts by mass of the rubber component is 50 parts by mass or less, preferably 40 parts by mass or less.

6. The tire of any one of claims 1 to 5, wherein the functional group interacting with silica comprises at least one selected from a group consisting of oxygen, nitrogen, silicon, and phosphorus.

7. The tire of any one of claims 1 to 6, wherein the rubber component further comprises a styrene-butadiene rubber.

8. The tire of any one of claims 1 to 7, wherein the rubber component further comprises an isoprene-based rubber.

9. The tire of any one of claims 1 to 8, wherein a content of an aromatic component in a component extracted with tetrahydrofuran is 11.0% by mass or less.

10. The tire of any one of claims 1 to 9, wherein the softening agent further comprises at least one selected from a group consisting of oil, a resin component, and an ester-based plasticizing agent.

11. The tire of any one of claims 1 to 10, wherein a ratio of a mass content of the modified liquid butadiene rubber to a total amount of the softening agent is greater than 15% by mass and less than 70% by mass.

12. The tire of claim 10 or 11, wherein the resin component comprises a terpene-based resin.

13. The tire of any one of claims 10 to 12, wherein the oil comprises mineral oil.

14. The tire of any one of claims 1 to 13, wherein the right side of the inequality (1) is 2150, preferably 2200, more preferably 2400.


**Patentansprüche**

1. Reifen, umfassend einen Laufstreifen,

   wobei der Laufstreifen mit einer Kautschukzusammensetzung aufgebaut ist, die eine Kautschukkomponente, Siliziumdioxid und einen Weichmacher umfasst,
   wobei die Kautschukkomponente einen Butadienkautschuk umfasst,
   wobei der Weichmacher einen modifizierten flüssigen Butadienkautschuk umfasst, der mit einer funktionellen Gruppe modifiziert ist, die mit Siliziumdioxid wechselwirkt,
   wobei, wenn ein Gehalt des Butadienkautschuks, nachdem die einer Vulkanisation unterzogene Kautschukzusammensetzung mit Tetrahydrofuran extrahiert wurde, als X (Massen-%) definiert ist, eine Reifenquerschnittsbreite als Wt (mm) definiert ist, und ein Reifenaußendurchmesser als Dt (mm) definiert ist, X, Wt und Dt den folgenden Ungleichungen (1) und (2) genügen.

$$(\pi/4) \times (Dt^2/Wt) > 1622 \cdots (1)$$

$$X > 1{,}77 \times 10^{-3} \times (\pi/4) \times (Dt^2/Wt) \cdots (2)$$

2. Reifen nach Anspruch 1, wobei ein Gehalt an Siliziumdioxid, bezogen auf 100 Massenteile der Kautschukkomponente, 40 Massenteile oder mehr beträgt, bevorzugt mehr als 40 Massenteile, bevorzugter mehr als 50 Massenteile, noch bevorzugter mehr als 60 Massenteile, besonders bevorzugt 100 Massenteile oder mehr.

3. Reifen nach Anspruch 1 oder 2, wobei der Gehalt an Siliziumdioxid, bezogen auf 100 Massenteile der Kautschukkomponente, 150 Massenteile oder weniger beträgt, bevorzugt 120 Massenteile oder weniger.

4. Reifen nach einem der Ansprüche 1 bis 3, wobei eine mittlere Primärpartikelgröße des Siliziumdioxids 20 nm oder weniger beträgt, bevorzugt 18 nm oder weniger, bevorzugter 17 nm oder weniger.

5. Reifen nach einem der Ansprüche 1 bis 4, wobei ein Gehalt des modifizierten flüssigen Butadienkautschuks, bezogen auf 100 Massenteile der Kautschukkomponente, 50 Massenteile oder weniger beträgt, bevorzugt 40 Massenteile oder weniger.

6. Reifen nach einem der Ansprüche 1 bis 5, wobei die funktionelle Gruppe, die mit Siliziumdioxid wechselwirkt, mindestens eines umfasst, das aus einer Gruppe bestehend aus Sauerstoff, Stickstoff, Silizium und Phosphor ausgewählt ist.

7. Reifen nach einem der Ansprüche 1 bis 6, wobei die Kautschukkomponente zudem einen Styrol-Butadien-Kautschuk umfasst.

8. Reifen nach einem der Ansprüche 1 bis 7, wobei die Kautschukkomponente zudem einen Isopren-basierten Kautschuk umfasst.

9. Reifen nach einem der Ansprüche 1 bis 8, wobei ein Gehalt einer aromatischen Komponente in einer mit Tetrahydrofuran extrahierten Komponente 11,0 Massen-% oder weniger beträgt.

10. Reifen nach einem der Ansprüche 1 bis 9, wobei der Weichmacher zudem mindestens eines umfasst, das aus einer Gruppe bestehend aus Öl, einer Harzkomponente und einem Ester-basierten Plastifiziermittel ausgewählt ist.

11. Reifen nach einem der Ansprüche 1 bis 10, wobei ein Verhältnis eines Massengehalts des modifizierten flüssigen Butadienkautschuks zu einer gesamten Menge des Weichmachers mehr als 15 Massen-% und weniger als 70 Massen-% beträgt.

12. Reifen nach Anspruch 10 oder 11, wobei die Harzkomponente ein Terpenbasiertes Harz umfasst.

13. Reifen nach einem der Ansprüche 10 bis 12, wobei das Öl Mineralöl umfasst.

14. Reifen nach einem der Ansprüche 1 bis 13, wobei die rechte Seite der Ungleichung (1) 2150 beträgt, bevorzugt 2200, bevorzugter 2400.


**Revendications**

1. Pneumatique comprenant une bande de roulement,

dans lequel la bande de roulement est composée d'une composition de caoutchouc comprenant un composant de caoutchouc, une silice et un agent ramollissant,
dans lequel le composant de caoutchouc comprend un caoutchouc butadiène,
dans lequel l'agent ramollissant comprend un caoutchouc butadiène liquide modifié qui est modifié avec un groupe fonctionnel qui interagit avec la silice,
dans lequel, quand une teneur en caoutchouc butadiène, après que la composition de caoutchouc soumise à une vulcanisation est extraite avec du tétrahydrofurane, est définie comme X (% en masse), une largeur de section transversale du pneumatique est définie comme Wt (mm), et un diamètre extérieur du pneumatique est défini comme Dt (mm), X, Wt, et Dt satisfont aux inégalités (1) et (2) suivantes :

$$(\pi/4) \times (Dt^2/Wt) > 1\,622 \qquad (1)$$

$$X > 1{,}77 \times 10^{-3} \times (\pi/4) \times (Dt^2/Wt) \qquad (2)$$

2. Pneumatique selon la revendication 1, dans lequel une teneur en silice sur la base de 100 parts en masse du composant de caoutchouc est de 40 parts en masse ou plus, de préférence supérieure à 40 parts en masse, de manière préférée supérieure à 50 parts en masse, de manière encore préférée supérieure à 60 parts en masse, et de toute préférence de 100 parts en masse ou plus.

3. Pneumatique selon la revendication 1 ou 2, dans lequel la teneur en silice sur la base de 100 parts en masse du composant de caoutchouc est de 150 parts en masse ou moins, de préférence de 120 parts en masse ou moins.

4. Pneumatique selon l'une quelconque des revendications 1 à 3, dans lequel une taille particulière primaire moyenne de la silice est de 20 nm ou moins, de préférence de 18 nm ou moins, de toute préférence de 17 nm ou moins.

5. Pneumatique selon l'une quelconque des revendications 1 à 4, dans lequel une teneur en caoutchouc butadiène liquide modifié sur la base de 100 parts en masse du composant de caoutchouc est de 50 parts en masse ou moins, de préférence de 40 parts en masse ou moins.

6. Pneumatique selon l'une quelconque des revendications 1 à 5, dans lequel le groupe fonctionnel interagissant avec la silice comprend au moins un élément sélectionné parmi un groupe constitué de : oxygène, azote, silicium, et phosphore.

7. Pneumatique selon l'une quelconque des revendications 1 à 6, dans lequel le composant de caoutchouc comprend en outre un caoutchouc styrène butadiène.

8. Pneumatique selon l'une quelconque des revendications 1 à 7, dans lequel le composant de caoutchouc comprend en outre un caoutchouc à base d'isoprène.

9. Pneumatique selon l'une quelconque des revendications 1 à 8, dans lequel une teneur en composant aromatique dans un composant extrait avec du tétrahydrofurane est de 11,0 % en masse ou moins.

10. Pneumatique selon l'une quelconque des revendications 1 à 9, dans lequel l'agent ramollissant comprend en outre au moins un élément parmi un groupe constitué de : huile, composant de résine, et agent plastifiant à base d'éther.

11. Pneumatique selon l'une quelconque des revendications 1 à 10, dans lequel un rapport d'une teneur en masse du caoutchouc butadiène liquide modifié sur une quantité totale de l'agent ramollissant est supérieur à 15 % en masse et inférieur à 70 % en masse.

12. Pneumatique selon la revendication 10 ou 11, dans lequel le composant de résine comprend une résine à base de terpène.

13. Pneumatique selon l'une quelconque des revendications 10 à 12, dans lequel l'huile comprend une huile minérale.

14. Pneumatique selon l'une quelconque des revendications 1 à 13, dans lequel le côté droit de l'inégalité (1) est 2 150, de préférence 2 200, de toute préférence 2 400.

# FIG. 1

**EP 4 242 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020132860 A